(19) Europäisches Patentamt
European Patent Office
Office européen des brevets

(11) **EP 0 767 542 B1**

(12) **EUROPÄISCHE PATENTSCHRIFT**

(45) Veröffentlichungstag und Bekanntmachung des Hinweises auf die Patenterteilung:
**10.11.2004  Patentblatt 2004/46**

(51) Int Cl.⁷: $H04B\ 1/48$, $H01P\ 1/15$

(21) Anmeldenummer: **96115264.2**

(22) Anmeldetag: **24.09.1996**

(54) **Sende-/Empfangs-Schalter**

Transmit-receive switch

Commutateur émission/réception

(84) Benannte Vertragsstaaten:
**DE FR GB IT SE**

(30) Priorität: **05.10.1995  DE 19537022**

(43) Veröffentlichungstag der Anmeldung:
**09.04.1997  Patentblatt 1997/15**

(73) Patentinhaber: **DaimlerChrysler AG**
**70567 Stuttgart (DE)**

(72) Erfinder:
• **Böhm, Konrad, Dr.-Ing.**
  **89134 Blaustein (DE)**
• **Götzfried, Rainer**
  **89073 Ulm (DE)**
• **Luy, Johann-Friedrich, Dr.-Ing.**
  **89075 Ulm (DE)**

(56) Entgegenhaltungen:
FR-A- 2 254 915          US-A- 5 081 706
US-A- 5 254 492          US-A- 5 355 524

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft einen Schalter nach dem Oberbegriff des Patentanspruchs 1 und eine Schaltung zum Senden und Empfangen von Leistung nach den Oberbegriffen der Patentansprüche 4 und 5.

Die Erfindung findet u.a. Verwendung in Kommunikationssystemen zur Herstellung von monolithisch integrierbaren Front-ends.

Als Schalter werden bisher PIN-Dioden oder MESFET verwendet, die aufgrund der besseren Schaltereigenschaften aus III/V-Halbleiterverbindungen hergestellt werden. PIN-Dioden auf Siliziumbasis sind ebenfalls bekannt, benötigen jedoch einen hohen Strom und sind nicht integrierbar in CMOS- oder SiGe-Prozesse.

Aus den US-Patenten US 5 081 706 und US 5 254 492 sind Sende-/Empfangsschalter beschrieben, die über einzelne Transistoren zwischen den Empfangs- bzw. Sendezweigen über ein Steuersignal geschaltet werden. Aus der französischen Patentanmeldung FR 2 254 915 und der inhaltsgleichen deutschen Patentanmeldung DE 23 62 889 A1 ist ein Sende-/Empfangsschalter bekannt, der in den Sende-/Empfangszweigen je eine PIN-Diode mit Kapazität enthält, die über einen separaten Steuersignaleingang so angesteuert wird, dass zwischen dem Empfangszweig und dem Sendezweig umgeschaltet werden kann.

Der Erfindung liegt deshalb die Aufgabe zugrunde, einen Sende-/Empfangs-Schalter anzugeben, der im Sendefall eine niedrige Einfügungsdämpfung zwischen Leistungsverstärker und Antenne und eine hohe Isolation zwischen Empfangsweiche und Sendeweiche aufweist. Im Empfangsfall soll er eine niedrige Einfügungsdämpfung zwischen Antenne und Empfangsmischer und eine hohe Impedanz im Sendezweig besitzen. Weiterhin ist es Aufgabe der Erfindung, ein Verfahren zum Senden bzw. Empfangen eines HF-Signals anzugeben, das wirkungsvoll zwischen dem Sende- und Empfangsbetrieb umschaltet.

Die Aufgabe wird gelöst durch die kennzeichnenden Merkmale der Patentansprüche 1, 4 und 5. Vorteilhafte Ausgestaltungen und/oder Weiterbildungen sind den Unteransprüchen zu entnehmen.

Die Erfindung hat den Vorteil, dass eine hohe Leistung den Heterobipolartransistor nahezu ungedämpft passiert. Dadurch muss der Schalter nicht vom Sende- in den Empfangszustand umgeschaltet werden, da die Signale aufgrund ihrer Leistung getrennt werden.

Des weiteren ist von Vorteil, dass durch Verwendung eines Heterobipolartransistors auf Si-Basis die monolithische Integration der Schalterfunktion zusammen mit Leistungsverstärkern und Mischerfunktionen in Si-Technologie durchführbar ist.

Die Erfindung wird anhand von Ausführungsbeispielen unter Bezugnahme auf schematische Zeichnungen beschrieben.

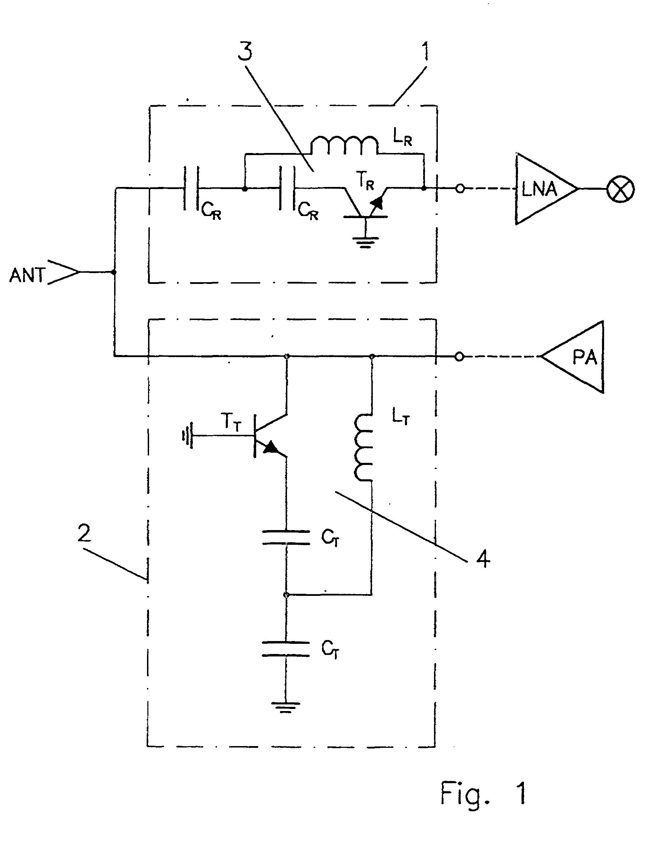

In FIG. 1 ist eine Prinzipschaltung einer Empfangsweiche 1 und einer Sendeweiche 2 für z.B. ein Front-end eines Transceivers dargestellt. Die Empfangsweiche 1 enthält einen Parallelschwingkreis 3 mit einer Induktivität $L_R$ und einem Kondensator $C_R$, sowie einen Heterobipolartransistor $T_R$ als Schalter.

Die Sendeweiche 2 enthält einen Serienschwingkreis 4 mit einer Induktivität $L_T$ und einem Kondensator $C_T$, sowie einen Heterobipolartransistor $T_T$ als Schalter.

Im Sendefall verläßt eine hohe HF-Leistung, z. B. 1W(30dBm) den Leistungsverstärker PA. Der Heterobipolartransistor ist aufgrund der hohen HF-Leistung durchgeschaltet, da eine hohe HF-Leistung den Transistor nahezu ungedämpft verläßt. Der Serienschwingkreis 4 wird durch den durchgeschalteten Transistor überbrückt. Die Impedanz des Serienschwingkreises wird durch $L_T$ bestimmt. $L_T$ ist deshalb so angelegt, daß

$$L_T >> \frac{\text{Antennenimpedanz}}{\omega}$$ und alle Leistung an die Antenne ANT geht. $L_T$ beträgt z.B. 13 nH.

In der Empfangsweiche 1 ist der Heterobipolartransistor $T_R$ ebenfalls durchgeschaltet, d.h. der Parallelschwingkreis ist in Betrieb und die Sendeleistung kommt nicht an den rauscharmen Vorverstärker LNA.

Im Empfangsfall kommt eine niedrige HF-Leistung von z.B. <1µW von der Antenne. Vom Leistungsverstärker PA kommt keine HF-Leistung.

Die Heterobipolartransistoren $T_R$ und $T_T$ sind gesperrt aufgrund der niedrigen Leistung. In der Sendeweiche 2 wird der Serienschwingkreis 4 geschaltet und führt zu der gewünschten hohen Impedanz. Es wird in der Sendeweiche 2 nahezu keine Empfangsleistung absorbiert. In der Empfangsweiche 1 wirkt der Parallelschwingkreis nicht, da der Transistor $T_R$ sperrt. Die Empfangsleistung kann über $L_R$ in den LNA und weiter an den Mischer. $L_R$ wird so gewählt, daß $L_R <$

$$\frac{\text{Eingangsimpedanz LNA}}{\omega}$$ und z.B. 25nH beträgt.

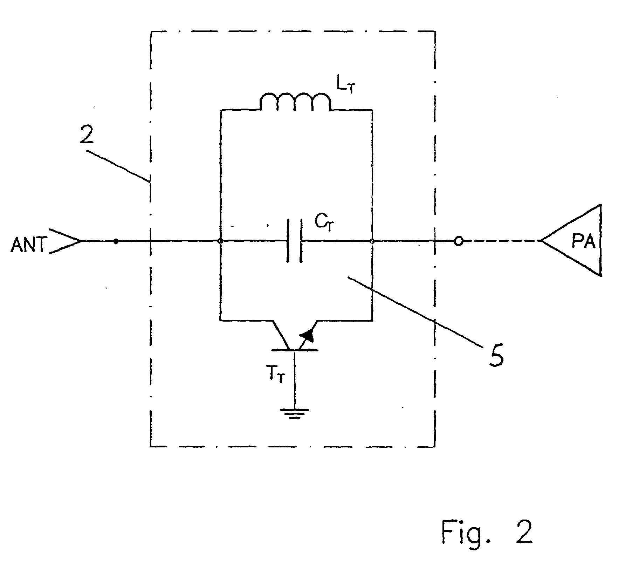

In FIG. 2 ist ein weiteres Ausführungsbeispiel für eine Sendeweiche dargestellt. Die Sendeweiche 2 enthält einen Parallelschwingkreis 5 mit der Induktivität $L_T$ und dem Kondensator $C_T$ sowie einem Heterobipolartransistor $T_T$. Im Sendefall kommt hohe Leistung vom Leistungsverstärker PA, die den Transistor $L_T$ nahezu ungedämpft passiert und an die Antenne ANT gelangt. Im Empfangsfall sperrt der Transistor $T_T$ aufgrund der niedrigen Leistung, die von der Antenne ANT kommt. Die hohe Impedanz $L_T$ kommt zur Wirkung, so daß nahezu keine Empfangsleistung in der Sendeweiche absorbiert wird.

Der Heterobipolartransistor wird aus Silizium und Germanium hergestellt. Vorzugsweise wird ein Si/SiGe-Heterobipolartransistor verwendet, der z.B. für geringe HF-Leistungen (bis zu 10dBm) eine Isolation im cut-off mode von etwa 30dB und eine Dämpfung in der Sättigung von weniger als 1,5dB aufweist.

Der Schalter ist mit Si-Technologie herstellbar und zusammen mit Leistungsverstärkern, Mischern und rauscharmen Vorverstärkern auf Si-Basis monolithisch integrierbar. Damit können komplett monolithisch integrierbare Front-ends für Transceiver mit Si-Technologie hergestellt werden.

**Patentansprüche**

1. Sende-/Empfangs-Schalter, der über Schwingkreise im Sendeund Empfangszweig schaltbar ist, **dadurch gekennzeichnet,**

   - **dass** der Schalter
     eine Empfangsweiche (1) mit einem Parallelschwingkreis (3, $L_R$, $C_R$)
     und eine Sendeweiche (2) mit einem Serien- (5, $L_T$, $C_T$) oder Parallelschwingkreis (4, $L_T$, $C_T$) enthält, und

   - **dass** in die Schwingkreise (3, 4, 5) je ein Heterobipolartransistor ($T_R$, $T_T$) derart eingefügt ist, dass die Transistoren durch eine im Sendezweig anliegende HF-Leistung durchschaltbar sind und dadurch mittels der Schwingkreise die Signalpfade von Empfangsbetrieb auf Sende betrieb umgeschaltet werden können.

2. Sende-/Empfangs-Schalter nach Anspruch 1, **dadurch gekennzeichnet, dass** der Heterobipolartransistor($T_R$, $T_T$)aus Si und Ge aufgebaut ist.

3. Sende-/Empfangs-Schalter nach den Ansprüchen 1 und 2, **dadurch gekennzeichnet, dass** der Schalter mit Si-Technologie herstellbar und in Frontends monolithisch integrierbar ist.

4. Verfahren zum Senden eines HF-Signals mit einem Schalter nach einem der vorhergehenden Ansprüche, **dadurch gekennzeichnet,**

   - **dass** eine hohe HF-Leistung in einem Leistungsverstärker (PA) erzeugt wird und auf die Sendeweiche (2) des Schalters qeqeben wird,
   - **dass** der Heterobipolartransistor ($T_T$) der Sendeweiche (2) aufgrund der hohen HF-Leistung durchschaltet,

     - **dass** die Impedanz des Serienschwingkreises (4) oder Parallelschwingkreises (5) durch eine Induktivität ($L_T$) bestimmt wird und derart ausgelegt ist, dass nahezu alle Leistung an die Antenne (ANT) abgeführt wird,
     - **dass** gleichzeitig in der Empfangsweiche (1) der Heterobipolartransistor ($T_R$) aufgrund der hohen HF-Leistung durchgeschaltet und der Parallelschwingkreis (3) schließt, und
   - **dass** nahezu keine zu sendende HF-Leistung an einen rauscharmen Vorverstärker (LNA) des Empfängers abgeführt wird.

5. Verfahren zum Empfangen eines HF-Signals mit einem Schalter nach einem der Ansprüche 1 bis 3, **dadurch gekennzeichnet,**

   - **dass** eine niedrige HF-Leistung von der Antenne (ANT) auf den Schalter gegeben wird,
   - **dass** in der Sendeweiche (2) der Heterobipolartransistor ($T_T$) aufgrund der niedrigen HF-Leistung sperrt und der Serienschwingkreis (4) oder Parallelschwingkreis (5) geschaltet wird,
   - **dass** durch die hohe Impedanz der Schwingkreise (4, 5) nahezu keine Leistung in der Sendeweiche (2) absorbiert wird, dass in der Empfangsweiche (1) der Heterobipolartransistor ($T_R$) aufgrund der niederen HF-Leistung sperrt, und
   - **dass** die empfangene HF-Leistung über eine Induktivität ($L_R$) an den rauscharmen Vorverstärker (LNA) des Empfängers abgeführt wird.

**Claims**

1. Transmit/receive switch which can be switched by means of oscillatory circuits in the transmission and reception branches, **characterized**

   - **in that** the switch contains a reception filter (1) with a parallel oscillatory circuit (3, $L_R$, $C_R$) and a transmission filter (2) with a series oscillatory circuit (5, $L_T$, $C_T$) or parallel oscillatory circuit (4, $L_T$, $C_T$), and

   - **in that** in each case a heterobipolar transistor ($T_R$, $T_T$) is inserted into the oscillatory circuits (3, 4, 5) in such a way that the transistors can be connected through by means of a radiofrequency power present in the transmission branch, and as a result the signal paths can be switched over from receive mode to transmission mode by means of the oscillatory circuits.

2. Transmit/receive switch according to Claim 1, **characterized in that** the heterobipolar transistor ($T_R$, $T_T$) is composed of Si and Ge.

3. Transmit/receive switch according to Claims 1 and 2, **characterized in that** the switch can be manufactured with Si technology and can be integrated monolithically into front ends.

4. Method for transmitting a radiofrequency signal with a switch according to one of the preceding claims, **characterized**

- **in that** a high radiofrequency power is generated in a power amplifier (PA) and is transmitted to the transmission filter (2) of the switch,
- **in that** the heterobipolar transistor ($T_T$) of the transmission filter (2) connects through owing to the high radiofrequency power,
- **in that** the impedance of the series oscillatory circuit (4) or parallel oscillatory circuit (5) is determined by an inductor ($L_T$) and is configured in such a way that virtually all the power is conducted away to the antenna (ANT),
- **in that** at the same time the heterobipolar transistor ($T_R$) in the reception filter (1) is connected through owing to the high radiofrequency power and the parallel oscillatory circuit (3) closes, and
- **in that** virtually no radiofrequency power which is to be transmitted is conducted away to a low-noise pre-amplifier (LNA) of the receiver.

5. Method for receiving a radiofrequency signal with a switch according to one of Claims 1 to 3, **characterized**

- **in that** a low radiofrequency power is fed to the switch by the antenna (ANT),
- **in that** the heterobipolar transistor ($T_T$) in the transmission filter (2) switches off owing to the low radiofrequency power, and the series oscillatory circuit (4) or parallel oscillatory circuit (5) is switched on,
- **in that**, as a result of the high impedance of the oscillatory circuits (4, 5), virtually no power is absorbed in the transmission filter (2), in that the heterobipolar transistor ($T_R$) in the reception filter (1) switches off owing to the low radiofrequency power, and
- **in that** the received radiofrequency power is conducted away to the low-noise pre-amplifier (LNA) of the receiver via an inductor ($L_R$).

**Revendications**

1. Commutateur émission/réception, qui peut être commuté par des circuits oscillants dans la branche d'émission et de réception, **caractérisé en ce que**

- le commutateur comprend une dérivation de réception (1) avec un circuit oscillant parallèle (3, $L_R$, $C_R$) et une dérivation d'émission (2) avec un circuit oscillant série (5, $L_T$, $C_T$) ou parallèle (4, $L_T$, $C_T$), et **en ce que**
- un transistor hétérobipolaire ($T_R$, $T_T$) est inséré dans chaque circuit oscillant (3, 4, 5), de telle façon que les transistors puissent être interconnectés par une puissance HF appliquée dans la branche d'émission et que les chemins des signaux puissent ainsi être inversés du mode de réception au mode d'émission au moyen des circuits oscillants.

2. Commutateur émission/réception selon la revendication 1, **caractérisé en ce que** le transistor hétérobipolaire ($T_R$, $T_T$) est constitué de Si et de Ge.

3. Commutateur émission/réception selon l'une des revendications 1 et 2, **caractérisé en ce que** le commutateur peut être fabriqué par la technologie du Si et peut être intégré de façon monolithique dans des extrémités d'entrée.

4. Procédé pour émettre un signal HF avec un commutateur selon l'une quelconque des revendications précédentes, **caractérisé en ce que**

- on produit une haute puissance HF dans un amplificateur de puissance (PA) et on l'envoie sur la dérivation d'émission (2) du commutateur,
- on interconnecte le transistor hétérobipolaire ($T_T$) de la dérivation d'émission (2) en raison de la haute puissance HF,
- on détermine l'impédance du circuit oscillant série (4) ou du circuit oscillant parallèle (5) par une inductance ($L_T$) et on la conçoit de telle manière que pratiquement toute la puissance soit transmise à l'antenne (ANT),
- on interconnecte simultanément le transistor hétérobipolaire ($T_R$) dans la dérivation de réception (1) en raison de la haute puissance HF et on ferme le circuit oscillant parallèle (3), et
- on ne transmet pratiquement aucune puissance HF à émettre à un préamplificateur à faible bruit (LNA) du récepteur.

5. Procédé pour recevoir un signal HF avec un commutateur selon l'une quelconque des revendications 1 à 3, **caractérisé en ce que**

- on transmet une faible puissance HF de l'antenne (ANT) au commutateur,
- on bloque le transistor hétérobipolaire ($T_T$) dans la dérivation d'émission (2) en raison de la faible puissance HF et on commute le circuit oscillant série (4) ou le circuit oscillant parallèle (5),
- on n'absorbe pratiquement aucune puissance dans la dérivation d'émission (2) par la haute impédance des circuits oscillants (4, 5),
- on bloque le transistor hétérobipolaire ($T_R$) dans la dérivation de réception (1) en raison de la faible puissance HF, et
- on envoie la puissance HF reçue par une inductance ($L_R$) au préamplificateur à faible bruit (LNA) du récepteur.

Fig. 1

Fig. 2